# EUROPÄISCHE PATENTANMELDUNG

(11) **EP 3 398 447 A1**
(43) Veröffentlichungstag der Anmeldung: **07.11.2018**
(21) Anmeldenummer: 17189718.4
(22) Anmeldetag: 06.09.2017
(51) Int. Cl.: A23K 10/20, A23K 20/174, A23K 20/20, A23K 50/48, A23K 10/26

(54) **FUTTERMITTEL**

(30) Priorität: 04.05.2017 EP 17169595
(71) Anmelder: 3vM Beteiligungsgesellschaft, 07381 Langenorla (DE)
(72) Erfinder: von Menges, Joachim, 07381 Langenorla (DE)
(74) Vertreter: Uexküll & Stolberg

(57) **Zusammenfassung**

Die vorliegende Erfindung betrifft Futtermittel, insbesondere Hunde- oder Katzenfutter, und Verfahren zu deren Herstellung. Das Futter umfasst folgende Bestandteile umfasst:
(1) Formfleisch;
(2) Muskelfaserfleisch und/oder Muskelfleisch und/oder oder Innereien; und
(3) Wasser, wässrige Brühe oder Fleischbrühe;
und ist dadurch gekennzeichnet, dass das Formfleisch Spurenelemente, Vitamine und Mineralien enthält, darunter:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

## Beschreibung

Die Erfindung betrifft Futtermittel, welche Formfleisch, Muskelfaserfleisch und/oder Muskelfleisch und/oder oder Innereien; und Wasser, wässrige Brühe oder Fleischbrühe umfassen bei denen im Wesentlichen alle zugesetzten Spurenelemente, Vitamine und Mineralien im Formfleisch und nicht in der wässrigen Flüssigkeit vorliegen. Das Futtermittel eignet sich hervorragend als Alleinfuttermittel für Hunde und Katzen.

### Technischer Hintergrund

Im Markt für Hunde und Katzenfutter ist es heute üblich, Dosen mit Formfleisch und Wasser als Sauce oder Gelee herzustellen. Diese sogenannten Brocken in Sauce oder Brocken in Gelee bestehen aus einem Formfleisch, das vor dem Ausformen mit einem Kuttersystem sehr fein zerkleinert wurde. Um ein Alleinfuttermittel zu erhalten, werden die Brocken üblicherweise mit Vitaminen und Mineralien vermischt.

Parallel dazu sind im Markt Produkte bekannt, bei denen eine vorgekochte Hühnerbrust, in der Regel mit Wasser versetzt, fein geschnitten und manuell oder maschinell abgefüllt als Einzelfuttermittel oder als Mischfuttermittel in Konservendosen verkauft wird. Diese sogenannten Thailand Qualitäten werden auch in verschiedenen anderen Verpackungsformen angeboten.

Es gibt ferner Dosen, in denen Muskelfaserfleisch und Innereien vorgekocht als Alleinfuttermittel abgefüllt vorliegen. In diesen Fällen finden sich die zugesetzten Vitamine und Mineralien in der wässrigen Flüssigkeit. Das führt zu einer Trübung der wässrigen Flüssigkeit und zu einem deutlich verschlechterten Aussehen.

Die der wässrigen Flüssigkeit zugesetzten Vitamine und Mineralien können ferner eine unerwünschte Verfärbung des Muskelfaserfleischs und/oder Muskelfleischs bewirken. Es ist insbesondere bekannt, dass Kupfer zu einer unerwünschten Verfärbung des Muskelfleischs vom Huhn führt.

Aufgrund der Trübung der wässrigen Flüssigkeit und der Verfärbung des Muskelfleischs sehen die im Markt verfügbaren Produkte nicht ansatzweise aus wie Produkte für die menschliche Verwendung, beispielsweise Hühnerfrikassee, Gulasch oder Ragout.

Mit der vorliegenden Erfindung wird es demgegenüber erstmals möglich, Alleinfuttermittel für Tiere mit einem Aussehen und einer Anmutung eines in der menschlichen Ernährung bekannten Hühnerfrikassee, Gulasch oder Ragout herzustellen.

### Beschreibung der Erfindung

Die vorliegende Erfindung stellt Futtermittel zur Verfügung, welche folgende Bestandteile umfassen:
(1) Formfleisch;
(2) Muskelfaserfleisch und/oder Muskelfleisch und/oder oder Innereien; und
(3) Wasser, wässrige Brühe oder Fleischbrühe;
wobei das Formfleisch die folgenden Bestandteile in folgenden Konzentrationen enthält:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

In einer weiteren Ausführungsform stellt die Erfindung Futtermittel zur Verfügung, die durch ein Verfahren erhältlich sind, bei dem man
(1) Spurenelemente, Vitamine und Mineralien zu Fleisch zugibt und die Mischung in einem Cutter zerkleinert;
(2) die Mischung aus (1) zu Formfleisch ausformt;
(3) die ausgeformte Mischung für mindestens 3 Minuten bei mindestens 100 °C vorgart;
(4) die Mischung aus (3) in eine Dose einführt;
(5) Wasser, wässrige Brühe oder Fleischbrühe, und Muskelfaserfleisch und/oder Muskelfleisch und/oder oder Innereien in die Dose einfüllt;
(6) die Dose verschließt und für mindestens 3 Minuten bei mindestens 100 °C und mindestens 1 bar gart,
wobei das Formfleisch vorzugsweise die folgenden Bestandteile in folgenden Konzentrationen enthält:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

Das Futtermittel der vorliegenden Erfindung kann einige, viele oder alle der für ein Alleinfuttermittel notwendigen Spurenelemente, Vitamine und Mineralien enthalten. In weiteren Ausführungsformen stellt die Erfindung daher Futtermittel zur Verfügung, in denen das Formfleisch in dem Futtermittel ferner mindestens einen der folgenden Bestandteile in folgenden Konzentrationen enthält:
(d) Vitamin D in einer Konzentration von mindestens 20 IU pro 100g Trockengewicht des Formfleischs;
(e) Calcium in einer Konzentration von mindestens 0,4 g pro 100g Trockengewicht des Formfleischs;
(f) Magnesium in einer Konzentration von mindestens 0,02 g pro 100g Trockengewicht des Formfleischs.

In einer besonders bevorzugten Ausführungsform enthält das Formfleisch zusätzlich Kupfer in einer Konzentration von mindestens 0,40 mg pro 100g Trockengewicht des Formfleischs.

Die vorliegende Anmeldung betrifft ferner Verfahren zur Herstellung eines Futtermittels, Schritte umfassend, bei denen man
(1) Spurenelemente, Vitamine und Mineralien zu Fleisch zugibt und die Mischung in einem Cutter zerkleinert;
(2) die Mischung aus (1) zu Formfleisch ausformt;
(3) die ausgeformte Mischung für mindestens 3 Minuten bei mindestens 100 °C vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für mindestens 15 Minuten bei mindestens 100 °C und mindestens 1 bar gart.

Wie oben erläutert, führen die Schritte (1) bis (3) dazu, dass Spurenelemente, Vitamine und Mineralien in dem Formfleisch vorliegen, wodurch das Aussehen des Futters verbessert wird. Es können wiederum einige, viele oder alle der für ein Alleinfuttermittel notwendigen Spurenelemente, Vitamine und Mineralien enthalten sein. Demgemäß stellt die Erfindung daher Verfahren zur Herstellung von Futtermitteln zur Verfügung, in denen das Formfleisch vorzugsweise die folgenden Bestandteile in folgenden Konzentrationen enthält:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs;
(d) Vitamin D in einer Konzentration von mindestens 20 IU pro 100g Trockengewicht des Formfleischs;
(e) Calcium in einer Konzentration von mindestens 0,4 g pro 100g Trockengewicht des Formfleischs;
(f) Magnesium in einer Konzentration von mindestens 0,02 g pro 100g Trockengewicht des Formfleischs.

In einer weiteren Ausführungsform stellt die Erfindung Verfahren zur Herstellung eines Futtermittels zur Verfügung, das Schritte umfasst, bei denen man
(1) die Konzentration an Spurenelementen, Vitaminen und Mineralien in allen Bestandteilen bestimmt, die zu dem Futtermittel verarbeitet werden sollen;
(2) eine Menge an Spurenelementen, Vitaminen und Mineralien ermittelt, die das Futtermittel enthalten müsste, um als Alleinfuttermittel für Hunde oder Katzen zugelassen zu werden;
(3) eine Menge an Spurenelementen, Vitaminen und Mineralien zum Fleischmix gibt, aus dem das Formfleisch gebildet wird, welche der Differenz zwischen der Menge an Spurenelementen, Vitaminen und Mineralien aus den in (2) geforderten und den in (1) gemessenen Werten entspricht;
(4) die Mischung aus Fleisch, Spurenelementen, Vitaminen und Mineralien aus (3) in einem Cutter bei mindestens -10 °C oder bei mindestens -15 °C und vorzugsweise bei -18 °C zerkleinert und zu Formfleisch ausformt;
(6) die ausgeformte Mischung für 3 bis 8 Minuten, vorzugsweise 5 Minuten, bei etwa 100 °C, vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für 15 bis 25 Minuten bei mehr als 120 °C, vorzugsweise bei 125 °C, und 1,5 bis 3,5 bar, vorzugsweise bei 3 bar, gart.

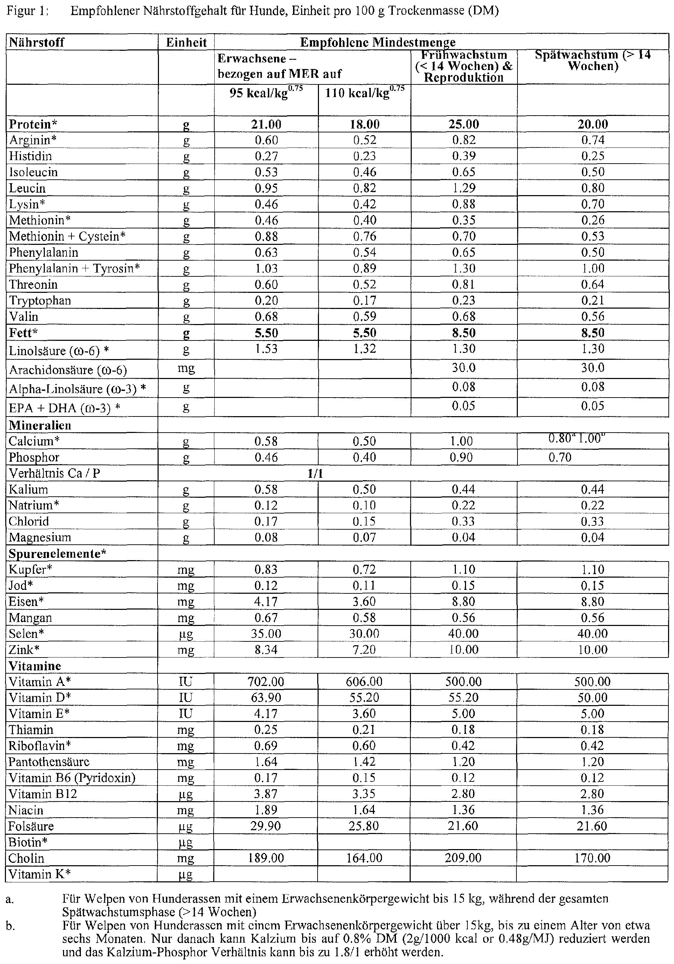

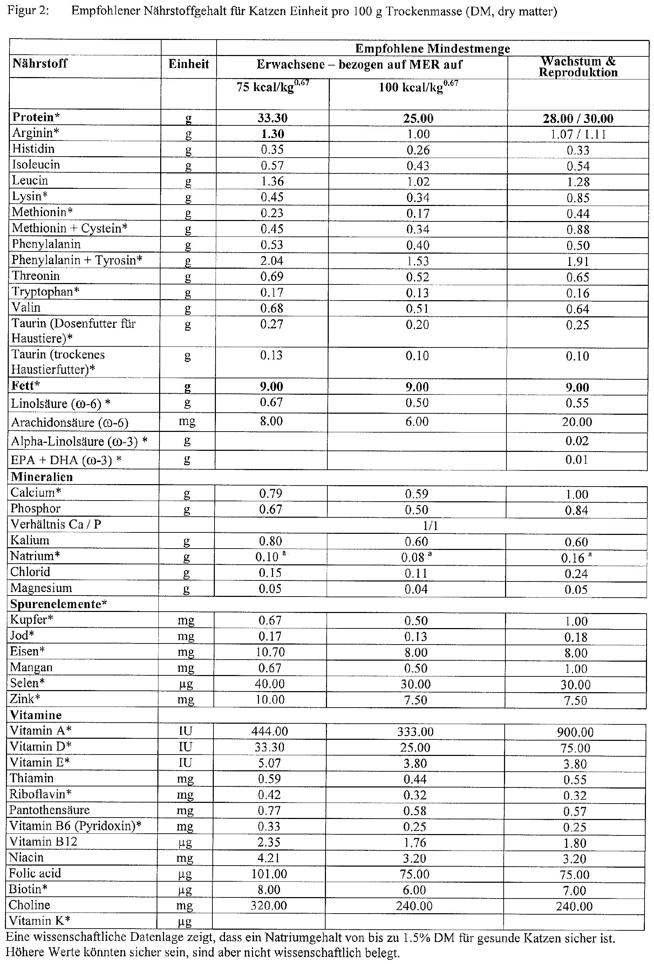

In dieser Ausführungsform sind Verfahren zur Herstellung eines Futtermittels besonders bevorzug, bei denen man:
(a) die Konzentration der Spurenelemente, Vitamine und Mineralien, die in Schritt (1) bestimmt wird, die Konzentration der in Figur 1 oder 2 genannten Spurenelemente, Vitamine und Mineralien ist; und/oder
(b) die Menge an Spurenelementen, Vitaminen und Mineralien, die in Schritt (3) zugegeben wird, der Menge entspricht, die zusammen mit dem natürlicherweise im Fleisch vorliegenden Menge an Spurenelementen, Vitaminen und Mineralien die in Figur 1 oder 2 genannten Konzentrationen an Spurenelementen, Vitaminen und Mineralien ergibt.

Die mit diesem Verfahren hergestellten Futtermittel weisen alle zugegebenen Spurenelementen, Vitaminen und Mineralien im Formfleisch auf und stellen gleichzeitig ein vollständiges Alleinfuttermittel nach den Richtlinien für Alleinfuttermittel dar. Figur 1 und 2 stellen die Anforderungen an Alleinfuttermittel für Hunde und Katzen gemäß Richtlinie dar.

In den Verfahren der vorliegenden Erfindung enthält das zugegebene Wasser, die wässrige Brühe oder die Fleischbrühe vor der Zugabe zur Dose keine Vitamine oder Mineralien; Spurenelemente sind nur in solchen Konzentrationen enthalten, wie sie im Trinkwasser üblich sind.

Die weiteren Ausführungsformen werden in den Ansprüchen beschrieben.

Die Erfindung ermöglicht es erstmals, in einer Konservendose sowohl Muskelfaserfleisch, wie Hühnerbrust, und Innereien als auch Muskelfleisch in Form von MDM oder ganzen Stücken als ganze Stücke oder als Formfleisch gemeinsam als Alleinfuttermittel für Hunde und Katzen abzufüllen.

Das Futtermittel kann als Alleinfuttermittel mit einer klaren wässrigen Flüssigkeit genutzt werden, weil es gelingt sämtliche Spurenelemente, Vitamine und Mineralstoffe, die für die Zusatzvitaminisierung und Mineralisierung wie auch für die Verbesserung der Akzeptanz notwendig sind, in dem Formfleischbrocken in der ersten Mischung zu konzentrieren. Durch Verzicht auf Beimischung der Spurenelemente, Vitamine und Mineralien in der als Sauce genutzten wässrigen Flüssigkeit entsteht eine sehr klare und appetitlich wirkende Sauce, die im Alleinfuttermittel für den nach einschlägigen Standard geforderten Flüssigkeitsanteil sorgt. Es entsteht ein Produkt, das wie ein Hühnerfrikassee, Gulasch oder Ragout aussieht.

Durch das gemeinsame Kochen der Zutaten während der Sterilisation bildet sich aus der Rektion von Muskelfleisch und Formfleisch mit den Zutaten ein leicht saurer Geschmack. Das Futtermittel kann daher einen pH Wert zwischen 6,0 und 6,8 aufweisen, vorzugsweise einen pH Wert von 6,4. Dieser pH Wert ist für die Akzeptanz ideal.

Zusätzlich kann auf alle herkömmlichen Geliermittel bei der Herstellung des Formfleisches verzichtet werden.

Dieses Verfahren kann und soll sowohl für Katzenfutter als auch für Hundefutter eingesetzt werden.

Die zweite Mischung besteht in einer Ausführungsform aus geschnittenen Muskelfaserfleisch und Innereien sowie dem wässrigen Anteil und dem Gemüse, Getreide, sonstige Kohlenhydratquellen. Ferner können geringe Mengen Xanthan als Abfüllhilfe zugesetzt werden.

Der Abfüllprozess erfolgt in zwei Schritten. Einem ersten Schritt wird das Formfleisch im definierten Anteil eingefüllt. Im zweiten Schritt wird mit einem zweiten Füller, zum Beispiel einem Vakuumfüller, eine weitere Mischung bestehend aus Muskelfaser Fleischstücken und einer Sauce oder einem Gelee vermischt mit Gemüsebestandteilen in die gleiche Dose abgefüllt.

### Beispiele

Beispielhaft für alle Rezepturen und technologischen Prozesse soll folgendes Voraehen beschrieben werden:

| | | Volle Mischung | in % | |
|---|---|---|---|---|
| **Mischer 1** | | | | |
| H MDM | | 1605 | 49,7 | |
| S Leber | | 600 | 18,6 | |
| S Niere | | 75 | 2,3 | |
| Flüssiqplasma | | 255 | 7,9 | |
| Plasmapulver | | 60 | 1,9 | |
| Rinderlunge | | 70 | 2,2 | |
| Summe | | 2665 | | |
| | | | | |

| **Vormischung Wasser Formfleisch** | | | | |
|---|---|---|---|---|
| Wasser ca 40 C | | 300 | 9,3 | |
| VM Katze 1 | | 52 | 1,61 | |
| VM Katze 2 | | 27 | 0,84 | |
| VM 3 | | 52 | 1,61 | |
| Lachsöl | | 35 | 1,1 | |
| VM 4 | | 12 | 0,37 | |
| Summe VM Wasser Chunk | | 481,9 | | |
| | | | | |
| | | | | |

| **Xanthan Ansatz Meat** | | | | |
|---|---|---|---|---|
| Wasser heiß 60 Grad | | 396,5 | 99,1 | |
| Xanthan | | 3,5 | 0,9 | |
| Gesamt | | 400 | | |
| | | | | |

| **Mischer Ragout/ Suppe** | | | | |
|---|---|---|---|---|
| Muskelfaserfleisch vorgekocht 1) | | 316 | 41,9 | |
| Innereien Vorgekocht 1) | | | | |
| Xanthan Ansatz | | 400 | 53,1 | |
| Gemüse 1 | | 19 | 2,5 | |
| Gemüse 2 | | 19 | 2,5 | |

| **Gesamt Meat Mischer** | | **754** | | |
|---|---|---|---|---|
| | | | | |
| 1) Vor dem Kochen gewürfelt und Eiweiß coaquliert | | | | |

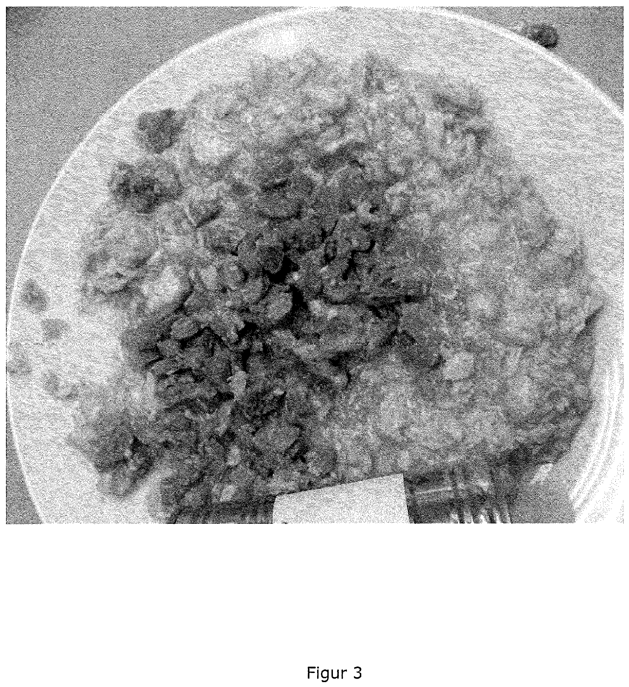

Das Produkt des hier beschriebenen Verfahrens wird in Figur 3 gezeigt.

## Patentansprüche

1. Futtermittel, das folgende Bestandteile umfasst:
(1) Formfleisch;
(2) Muskelfaserfleisch und/oder Muskelfleisch und/oder oder Innereien; und
(3) Wasser, wässrige Brühe oder Fleischbrühe;
wobei das Formfleisch Spurenelemente, Vitamine und Mineralien enthält, darunter:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

2. Futtermittel, erhältlich durch ein Verfahren, bei dem man
(1) Spurenelemente, Vitamine und Mineralien zu Fleisch zugibt und die Mischung in einem Cutter zerkleinert;
(2) die Mischung aus (1) zu Formfleisch ausformt;
(3) die ausgeformte Mischung für mindestens 3 Minuten bei mindestens 100 °C vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für mindestens 3 Minuten bei mindestens 100 °C und mindestens 1 bar gart,
wobei das Formfleisch vorzugsweise die folgenden Bestandteile in folgenden Konzentrationen enthält:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

3. Futtermittel gemäß Anspruch 1 oder 2, für Katzen wobei das Futtermittel einen pH Wert zwischen 6,0 und 6,8 aufweist, vorzugsweise einen pH Wert von 6,4.

4. Futtermittel gemäß einem der Ansprüche 1 bis 3, wobei das Formfleisch in dem Futtermittel ferner mindestens einen der folgenden Bestandteile in folgenden Konzentrationen enthält:
(d) Vitamin D in einer Konzentration von mindestens 20 IU pro 100g Trockengewicht des Formfleischs;
(e) Calcium in einer Konzentration von mindestens 0,4 g pro 100g Trockengewicht des Formfleischs;
(f) Magnesium in einer Konzentration von mindestens 0,02 g pro 100g Trockengewicht des Formfleischs.

5. Futtermittel gemäß einem der Ansprüche 1 bis 4, wobei das Futtermittel ferner Gemüse und/oder Xanthan enthält.

6. Futtermittel gemäß einem der Ansprüche 1 bis 5, wobei das Futtermittel ein Alleinfuttermittel für Hunde oder Katzen ist.

7. Verfahren zur Herstellung eines Futtermittels, Schritte umfassend, bei denen man
(1) Spurenelemente, Vitamine und Mineralien zu Fleisch zugibt und die Mischung in einem Cutter zerkleinert;
(2) die Mischung aus (1) zu Formfleisch ausformt;
(3) die ausgeformte Mischung für mindestens 3 Minuten bei mindestens 100 °C vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für mindestens 15 Minuten bei mindestens 100 °C und mindestens 1 bar gart.

8. Verfahren zur Herstellung eines Alleinfuttermittels für Hunde oder Katzen, Schritte umfassend, bei denen man
(1) Spurenelemente, Vitamine und Mineralien zu Fleisch zugibt und die Mischung in einem Cutter bei mindestens -10 °C oder bei mindestens -15 °C und vorzugsweise bei -18 °C zerkleinert;
(2) die Mischung aus (1) zu Formfleisch ausformt;
(3) die ausgeformte Mischung für etwa 5 Minuten bei 120 °C vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für etwa 20 Minuten bei 120 °C und 3 bar gart.

9. Verfahren zur Herstellung eines Futtermittels, Schritte umfassend, bei denen man
(1) die Konzentration an Spurenelementen, Vitaminen und Mineralien in allen Bestandteilen bestimmt, die zu dem Futtermittel verarbeitet werden sollen;
(2) eine Menge an Spurenelementen, Vitaminen und Mineralien ermittelt, die das Futtermittel enthalten müsste, um als Alleinfuttermittel für Hunde oder Katzen zugelassen zu werden;
(3) eine Menge an Spurenelementen, Vitaminen und Mineralien zum Fleischmix gibt, aus dem das Formfleisch gebildet wird, welche der Differenz zwischen der Menge an Spurenelementen, Vitaminen und Mineralien aus den in (2) geforderten und den in (1) gemessenen Werten entspricht;
(4) die Mischung aus Fleisch, Spurenelementen, Vitaminen und Mineralien aus (3) in einem Cutter bei mindestens -10 °C oder bei mindestens -15 °C und vorzugsweise bei -18 °C zerkleinert und zu Formfleisch ausformt;
(6) die ausgeformte Mischung für 3 bis 8 Minuten, vorzugsweise 5 Minuten, bei etwa 100°C, vorgart;
(4) die Mischung aus (3) in eine Dose einführt;
(5) Wasser, wässrige Brühe oder Fleischbrühe und Muskelfaserfleisch und/oder Muskelfleisch und/oder oder Innereien in die Dose einfüllt;
(6) die Dose verschließt und für 15 bis 25 Minuten bei mehr als 120°C, vorzugsweise bei 125 °C, und 1,5 bis 3,5 bar, vorzugsweise bei 3 bar, gart.

10. Verfahren zur Herstellung eines Futtermittels gemäß einem der Ansprüche 7 bis 9, bei dem das Formfleisch die folgenden Bestandteile in folgenden Konzentrationen enthält:
(a) Eisen in einer Konzentration von mindestens 7,00 mg pro 100g Trockengewicht des Formfleischs;
(b) Selen in einer Konzentration von mindestens 25,00 µg pro 100g Trockengewicht des Formfleischs;
(c) Zink in einer Konzentration von mindestens 7.50 mg pro 100g Trockengewicht des Formfleischs.

11. Verfahren zur Herstellung eines Futtermittels gemäß einem der Ansprüche 7 bis 10, bei dem das Formfleisch ferner die folgenden Bestandteile in folgenden Konzentrationen enthält:
(d) Vitamin D in einer Konzentration von mindestens 20 IU pro 100g Trockengewicht des Formfleischs;
(e) Calcium in einer Konzentration von mindestens 0,4 g pro 100g Trockengewicht des Formfleischs;
(f) Magnesium in einer Konzentration von mindestens 0,02 g pro 100g Trockengewicht des Formfleischs.

12. Verfahren zur Herstellung eines Futtermittels gemäß einem der Ansprüche 7 bis 11, bei dem:
(a) die Konzentration der Spurenelemente, Vitamine und Mineralien, die in Schritt (1) bestimmt wird, die Konzentration der in Figur 1 oder 2 genannten Spurenelemente, Vitamine und Mineralien ist; und/oder
(b) die Menge an Spurenelementen, Vitaminen und Mineralien, die in Schritt (3) zugegeben wird, der Menge entspricht, die zusammen mit dem natürlicherweise im Fleisch vorliegenden Menge an Spurenelementen, Vitaminen und Mineralien die in Figur 1 oder 2 genannten Konzentrationen an Spurenelementen, Vitaminen und Mineralien ergibt.

13. Verfahren zur Herstellung eines Futtermittels einem der Ansprüche Anspruch 7 bis 12, bei dem das zugegebene Wasser, die wässrige Brühe und die Fleischbrühe vor der Zugabe zur Dose keine Vitamine enthält und Mineralien und Spurenelemente nur in solchen Konzentrationen enthält, wie sie im Trinkwasser üblich sind.

14. Verfahren zur Herstellung eines Futtermittels gemäß einem der Ansprüche 7 bis 13, wobei das Futtermittel ein Alleinfuttermittel für Hunde oder Katzen ist.

15. Futtermittel, das durch ein Verfahren gemäß einem der Ansprüche 7 bis 14 erhältlich ist.
